(19)

Europäisches Patentamt

European Patent Office

Office européen des brevets

(11) **EP 4 539 350 A1**

(12) **EUROPEAN PATENT APPLICATION**

(43) Date of publication:
**16.04.2025 Bulletin 2025/16**

(21) Application number: **23306795.8**

(22) Date of filing: **13.10.2023**

(51) International Patent Classification (IPC):
**H04B 7/04** *(2017.01)* **H01Q 15/14** *(2006.01)*
**H04B 7/06** *(2006.01)*

(52) Cooperative Patent Classification (CPC):
**H04B 7/0617; H01Q 1/246; H01Q 3/44;**
**H01Q 15/148; H01Q 21/28; H04B 7/04013**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Institut Mines Telecom**
  **91120 Palaiseau (FR)**
- **Institut National des Sciences Appliquées de Rennes**
  **35708 Rennes Cedex 7 (FR)**
- **Centre National de la Recherche Scientifique**
  **75794 Paris Cedex 16 (FR)**
- **Université de Rennes**
  **35042 Rennes (FR)**

- **Nantes Université**
  **44035 Nantes Cedex 1 (FR)**
- **Ecole Centralesupélec**
  **91190 Gif-sur-Yvette (FR)**

(72) Inventors:
- **DOUMIT, Joseph**
  **29200 BREST (FR)**
- **ABDEL NOUR, Charbel**
  **29200 BREST (FR)**
- **FARAH, Joumana**
  **35000 RENNES (FR)**
- **YOUSSEF, Marie-Josepha**
  **92220 BAGNEUX (FR)**

(74) Representative: **Atout PI Laplace**
**Immeuble Up On**
**25 Boulevard Romain Rolland**
**CS 40072**
**75685 Paris Cedex 14 (FR)**

(54) **SYSTEM AND METHOD IMPLEMENTING UPLINK VIA RECONFIGURABLE INTELLEGENT SURFACES**

(57)   NOMA uplink communications via Reconfigurable Intelligent surfaces are proposed based on the determination of Reconfigurable Intelligent surfaces sub-surface configurations compatible with NOMA successive interference cancellation requirements. For multiple sets of RIS sub-surfaces, the solution extends to reconfiguring user device to sub-channel attributions either in a coordinated mode or an uncoordinated mode based on a multi-player Multi-armed Bandit framework with zero-reward.

FIG. 5

**Description**

FIELD OF THE INVENTION

The invention pertains to intelligent reflective surfaces or reconfigurable intelligent surfaces (RIS) and their adaptation to certain communications technologies.

BACKGROUND PRIOR ART

Wireless communication networks are undergoing an extensive evolution driven by the widespread adoption of the Internet of Things (IoT). It is predicted that IoT devices will constitute the majority of mobile traffic in fifth generation (5G) and beyond 5G (B5G) networks. These devices are being deployed to support multiple applications across multiple sectors. Due to the heterogeneous nature of target IoT applications, the traffic generated by these devices exhibits a wide range of characteristics and requirements in terms of latency, required rate, complexity and sporadicity. That said, with the deployment of the massive numbers of devices, the volume of transmitted IoT packets can lead to high latency. Thus, resource allocation strategies must be designed to meet the low latency and low complexity requirements of different applications while enabling the development of scalable and auto-configurable massive IoT systems.

Non orthogonal multiple access (NOMA) has received considerable attention for its potential to support massive connectivity and enhance spectrum efficiency. NOMA increases system capacity by allowing devices to share the same time and frequency resources in a non-orthogonal way, leading to the number of served devices being larger than that of the orthogonal resources. This is achieved through power domain or code domain multiplexing. NOMA offers higher spectral efficiency and data rates compared to orthogonal multiple access (OMA). However, this multiplexing scheme increases the complexity of the receivers, which must recover the non-orthogonal signals by employing successive interference cancellation (SIC). Early research on NOMA primarily focused on downlink scenarios. While some studies aimed to maximize the average throughput, others focused on minimizing the average downlink transmission power while meeting user rate requirements.

In addition to its ability to achieve massive connectivity and enhance spectral efficiency, NOMA can optimize system energy efficiency (EE), defined as the ratio of total rate to total power consumption. Several research studies have proposed techniques to maximize the system EE in wireless networks using various schemes such as OMA and NOMA.

Meanwhile the use of reconfigurable intelligent surfaces (RIS) is being explored as a potential technology to improve spectrum and EE in wireless networks. By using an array of affordable and passive reflecting elements, RIS can reconfigure the wireless propagation environment and facilitate the creation of effective wireless networks through a control link to the base station (BS). In fact, each reflective element of the RIS can adjust the reflection coefficients of the incident signal, such as phase shift and amplitude, to increase the signal power at the receiver side. RISs, unlike traditional amplify-and-forward relay, typically lack signal processing capabilities and only passively reflect signals, avoiding additional noise on the reflected signals, as described in the article by S. Gong, X. Lu, D. T. Hoang, D. Niyato, L. Shu, D. I. Kim, and Y.-C. Liang entitled "Toward Smart Wireless Communications via Intelligent Reflecting Surfaces: A Contemporary Survey," IEEE Commun. Surveys & Tutorials, vol. 22, no. 4, pp. 2283-2314, 2020, and the article by J. Zhao entitled "A Survey of Intelligent Reflecting Surfaces (IRSs): Towards 6G Wireless Communication Networks," 2019. [Online]. Available: https://arxiv.org/abs/1907.04789.

Added to that, unlike active intelligent surface based massive multiple-input multiple-output (MIMO), RISs do not suffer from high hardware costs and power consumption.

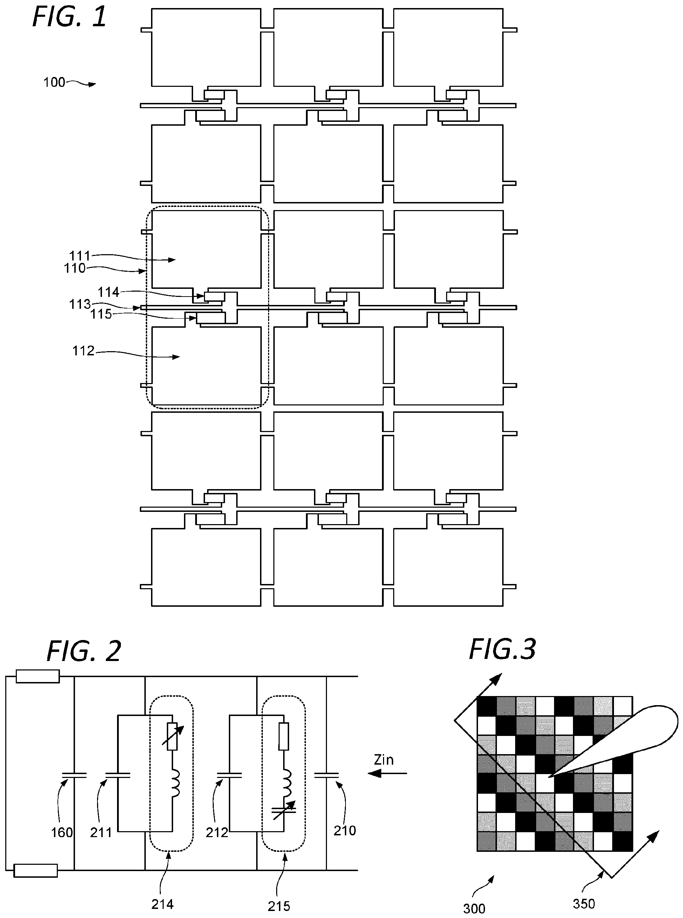

Figure 1 presents an exemplary RIS structure as known in the prior art.

As shown, the RIS structure comprises an array of identical cells 100, of which cell 110 is an example. Cell 101 comprises a first capacitive region 111 a second capacitive region 112 and a third capacitive region 113. First region 111 is coupled to third region 113 via a PIN diode 114. Second region region 112 is coupled to third region 113 via a varactor diode 115. A ground plane (not shown) constitutes as transmission line.

Figure 2 presents an equivalent circuit of a part of the exemplary RIS structure of figure 1 as known in the prior art.

As shown, the capacitance 211 corresponds to the capacitance between region 111 and 213, the capacitance 212 corresponds to the capacitance between region 112 and 113, and capacitance 213 corresponds to the capacitance between region 111 and 112. The equivalent circuit of PIN diode 114 is represented by component group 214, and the equivalent circuit of varactor 115 is represented by component group 215.

On this basis, amplitude and phase of the reflection coefficient can be controlled by adjusting the variable capacitance of varactor 215 and the variable resistance of PIN diode 214.

Meanwhile, in accordance with the generalized Snell's law, anomalous reflection of EM waves will occur when there is a phase discontinuity on a material interface. By establishing a phase gradient along the matrix 100 a beam steering orientation can be achieved.

Figure 3 provides a representation of an oriented phase gradient in RIS according to figures 1 and 2.

As shown, the phase offset of each cell of RIS 100 is adjusted to as to exhibit a gradient in a selected direction as indicated by the arrows 350, thereby achieving beam steering in the desired direction.

The desired phase coefficient values for an RIS as a whole may be handled as a matrix calculation, where

$$\Phi_i = diag\{\beta_{1,i}e^{j\phi_{1,i}}, \beta_{2,i}e^{j\phi_{2,i}}, \dots, \beta_{S,i}e^{j\phi_{S,i}}$$

is the reflection coefficient matrix of the i=th RIS with $\beta_{S,i}\in[0,1]$ and $\phi_{S,i}\in[-\pi, \pi]$ being respectively the amplitude and phase shift of the s-th sub-surface in the i-th RIS.

The reflecting elements, which are chosen to be configured in the same way (having the same colour in the figure), are generally grouped as $\phi_i$ in the matrix $\Phi$.

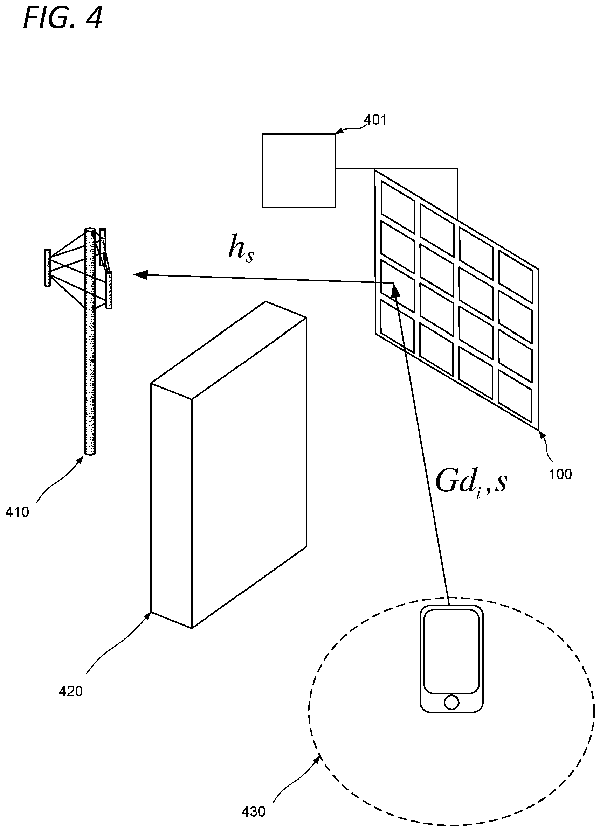

Figure 4 presents a use case scenario for a RIS device.

As shown in figure 4 a base station 410 is in wireless communication with one a user device 430. As shown, the direct path between the base station and the user device is obstructed by obstacle 420, degrading the performance of the direct communication channel. Meanwhile, RIS 100 is situated with respect to the base station such that when suitably oriented in accordance with the principles presented with respect to figures 1 to 3, the one or more sub-surfaces establish an indirect radiation path between the device and the base station.

The ability to control channel conditions through adjusting the amplitude and the phase shift of RIS elements compels one to explore the potential benefits of RIS assisted NOMA systems, as demonstrated by recent literature.

In the article by G. Yang, X. Xu, and Y.-C. Liang entitled "Intelligent Reflecting Surface Assisted Non-Orthogonal Multiple Access," in 2020 IEEE Wireless Commun. And Net. Conf. (WCNC), Seoul, Korea (South), May 2020, pp. 1-6., the joint optimization of power allocation and phase shifts was studied by using an alternating optimization algorithm and semi-definite relaxation (SDR). The authors proposed a novel decoding order searching algorithm based on maximizing the combined channel gain of each user.

In the article by Z. Ding and H. Vincent Poor, "A Simple Design of IRS-NOMA Transmission," IEEE Commun. Lett., vol. 24, no. 5, pp. 1119-1123, 2020, a MISO RIS NOMA transmission model with a fixed decoding order was considered. The phase shift was optimized using zero-forcing beamforming to maximize the signal-to-interference-plus-noise ratio (SINR) under ideal beamforming assumptions, and a low cost implementation structure was proposed by applying on-off control under finite resolution beam-forming.

In the article by Y. Li, M. Jiang, Q. Zhang, and J. Qin entitled "Joint Beam-forming Design in Multi-Cluster MISO NOMA Reconfigurable Intelligent Surface-Aided Downlink Communication Networks," IEEE Trans. on Commun., vol. 69, no. 1, pp. 664-674, 2021 an algorithm based on effective second-order cone programming (SOCP) alternating direction method of multipliers (ADMM) was proposed for MISO RIS-NOMA systems, assuming perfect SIC decoding order. To reduce complexity, a zero-forcing based sub-optimal algorithm was introduced.

Introducing RIS into a wireless communication system can boost network coverage. However, the optimization problems arising from such systems can be complex to solve since the reflection coefficients of the RIS need to be optimized along with other variables, such as transmit power and beamforming vectors. Therefore, it is crucial to design efficient algorithms for RIS-assisted wireless communication systems.

SUMMARY OF THE INVENTION

In accordance with the present invention in a first aspect there is provided a telecommunications system comprising a first plurality of devices and a base station, where each device transmits non-orthogonally multiplexed signals on the same sub-band and the base station discriminates the devices on the basis of a characteristic signal power. The system further comprises a reconfigurable intelligent surface and a controller, the reconfigurable intelligent surface comprising one or more sub-surfaces whose orientation is dynamically configurable under the control of the controller, the reconfigurable intelligent surface being situated with respect to the base station such that when suitably oriented the one or more sub-surfaces establish an indirect radiation path between the devices and the base station. The controller is adapted to determine a configuration solution for the one or more sub-surfaces defining an indirect radiation path between the devices and the base station in which a characteristic received signal power assigned for each device such that the received signal power for each device is equal to or greater than the sum of the received power levels for all devices having a lower power level, is respected in the signals received from each respective device at the base station after passing via the indirect radiation path, by solving the equation system arising from the formula:

$$V_{d_k} = P_{d_k}^t \left| G_{d_k}^T \Phi h + h_{d_k} \right|^2$$

for $\Phi$, where $\Phi$ is a configuration parameter of the one or more sub-surfaces having a phase and amplitude component,

$V_{d_k}$ is the characteristic received signal power assigned to each respective device $d_k$ such that the received signal power for each device is equal to or greater than the sum of the received power levels for all devices having a lower power level, $G_{d_k}^T$ is the channel gain for the radiation path between each device and the one or more sub-surfaces and h is the channel gain vector for the radiation path between the one or more sub-surfaces and the base station, and $h_{d_k}$ is the channel gain vector for the direct radiation path between each device and the base station.

In accordance with a development of the first aspect, the base station is adapted to determine the channel gain for the indirect radiation path for each device, and the system comprises a communications link between the base station and the controller, wherein the base station is adapted to transmit the configuration parameter for the indirect radiation path to the controller via the communications link.

In accordance with a development of the first aspect, the system comprises one or more further reconfigurable intelligent surface comprises each comprising one or more further pluralities of one or more sub-surfaces, and the controller is adapted to determine a configuration solution whereby each of the pluralities of one or more sub-surfaces may be configured so as to establish an indirect radiation path between a respective further plurality of devices and the base station in which the characteristic received signal power assigned for each device is respected in the signals received from each respective device at the base station after passing via the indirect radiation path, and to configure the pluralities of one or more sub-surfaces accordingly.

In accordance with a development of the first aspect, a plurality of candidate configuration solutions is determined, and the step of determining a configuration solution comprises selecting a candidate configuration solution offering the largest total sum rate.

In accordance with a development of the first aspect, the system comprises one or more further reconfigurable intelligent surfaces each comprising one or more further pluralities of one or more sub-surfaces, and wherein the controller is adapted to determine that no configuration solution whereby each of the pluralities of one or more sub-surfaces may be configured so as to establish an indirect radiation path between a respective further plurality of devices and the base station in which the characteristic received signal power assigned for each device is respected in the signals received from each respective device at the base station after passing via the indirect radiation path, is available, and to exchange the characteristic power level attributions of one or more pairs of devices, and to repeat the steps of determining and exchanging until a configuration solution whereby each of the pluralities of one or more sub-surfaces may be configured so as to establish an indirect radiation path between a respective further plurality of devices and the base station in which the characteristic signal power assigned to each device remains apparent in the signals received from each respective device at the base station after passing via the indirect radiation path is obtained, and to configure the pluralities of one or more sub-surfaces accordingly.

In accordance with a development of the first aspect, the system is further adapted prior to the step of configuring one or more sub-surfaces so as to establish an indirect radiation path between the devices and the base station in which the characteristic signal power assigned to each device remains apparent in the signals received from each respective device at the base station after passing via the indirect radiation path, to perform a step of determining at the base station which of a second plurality of devices to attribute to the sub-bands as the first plurality of devices, and emitting an instruction to each device in the first plurality of devices to transmit on the sub-band accordingly.

In accordance with a development of the first aspect, the system is further adapted prior to the step of configuring one or more sub-surfaces so as to establish an indirect radiation path between the devices and the base station in which the characteristic signal power assigned to each device remains apparent in the signals received from each respective device at the base station after passing via the indirect radiation path, to perform a step of determining at each device whether to attempt a transmission on the sub-band.

In accordance with a development of the first aspect, the system comprises one or more further reconfigurable intelligent surface, each comprising one or more further pluralities of one or more sub-surfaces, and wherein the controller is adapted to determine that no configuration solution whereby each of the pluralities of one or more sub-surfaces may be configured so as to establish an indirect radiation path between a respective further plurality of devices and the base station in which the characteristic received signal power assigned for each device is respected in the signals received from each respective device at the base station after passing via the indirect radiation path is available, and to select the sub-band having the highest number of available solutions as a reference sub band, sending the devices that use the reference channel their achieved rates as rewards, and sending a rate to the other devices, such that the other devices are incentivized to change to different sub-bands, and to repeat the steps of determining and sending until a configuration solution whereby each of the pluralities of one or more sub-surfaces may be configured so as to establish an indirect radiation path between a respective further plurality of devices and the base station in which the characteristic signal power assigned to each device remains apparent in the signals received from each respective device at the base station after passing via the indirect radiation path is obtained, and to configure the pluralities of one or more sub-surfaces accordingly.

In accordance with a development of the first aspect, the system is further adapted prior to the step of configuring one or more sub-surfaces so as to establish an indirect radiation path between the devices and the base station in which the characteristic signal power assigned to each device remains apparent in the signals received from each respective device at the base station after passing via the indirect radiation path, to perform a step of determining how many power levels to attribute to the sub-band based on the channel gain for the radiation path between each device and the one or more sub-surfaces and h is the channel gain vector for the radiation path between the one or more sub-surfaces and the base station, and

attributing the power levels to respective devices based on the channel gain for the radiation path between each device and the one or more sub-surfaces and h is the channel gain vector for the radiation path between the one or more sub-surfaces and the base station.

In accordance with the present invention in a second aspect there is provided a method of operating a telecommunications system comprising a first plurality of devices and a base station, where each device transmits non-orthogonally multiplexed signals on the same sub-band and the base station discriminates the devices on the basis of a characteristic signal power, the system further comprising a reconfigurable intelligent surface and a controller, the reconfigurable intelligent surface comprising one or more sub-surfaces whose orientation is dynamically configurable under the control of the controller,

the method comprising the steps of configuring the one or more sub-surfaces so as to establish an indirect radiation path between the devices and the base station in which the a characteristic received signal power assigned for each device such that the received signal power for each device is equal to or greater than the sum of the received power levels for all devices having a lower power level, is respected in the signals received from each respective device at the base station after passing via the indirect radiation path,

wherein the step of determining the configuration of the one or more sub-surfaces comprises by solving the equation system arising from the formula:

$$V_{d_k} = P_{d_k}^t \left| G_{d_k}^T \Phi \mathrm{h} + h_{d_k} \right|^2$$

for $\Phi$, Where $\Phi$ is a configuration parameter of the one or more sub-surfaces having a phase and amplitude component, $V_{d_k}$ is the characteristic received signal power assigned to each respective device $d_k$ such that the received signal power for each device is equal to or greater than the sum of the received power levels for all devices having a lower power level, $G_{d_k}^T$ is the channel gain for the radiation path between each device and the one or more sub-surfaces and h is the channel gain vector for the radiation path between the one or more sub-surfaces and the base station, and $h_{d_k}$ is the channel gain vector for the direct radiation path between each device and the base station.

In accordance with a development of the second aspect, the system comprises one or more further intelligent surface, each comprising one or more further pluralities of one or more sub-surfaces, and wherein the method comprises the further steps of determining that no configuration solution whereby each of the pluralities of one or more sub-surfaces may be configured so as to establish an indirect radiation path between a respective further plurality of devices and the base station for a respective in which the characteristic received signal power assigned for each device is respected in the signals received from each respective device at the base station after passing via the indirect radiation path is available, and

exchanging the characteristic power level attributions of one or more pairs of devices, and repeating the steps of determining and exchanging until a configuration solution whereby each of the pluralities of one or more sub-surfaces may be configured so as to establish an indirect radiation path between a respective further plurality of devices and the base station for a respective in which the characteristic signal power assigned to each device remains apparent in the signals received from each respective device at the base station after passing via the indirect radiation path is obtained, and configuring the pluralities of one or more sub-surfaces accordingly.

In accordance with a development of the second aspect, the system comprises one or more futher intelligent surface, each said further intelligent surface comprising one or more further pluralities of one or more sub-surfaces, and wherein the method comprises the further steps of determining that no configuration solution whereby each of the pluralities of one or more sub-surfaces may be configured so as to establish an indirect radiation path between a respective further plurality of devices and the base station for a respective in which the characteristic received signal power assigned for each device is respected in the signals received from each respective device at the base station after passing via the indirect radiation path is available, and selecting the sub-band having the highest number of available solutions as a reference sub band, sending the devices that use the reference channel their achieved rates as rewards, and sending a rate to the other devices, such that the other devices are incentivized to change to different sub-bands, and repeating the steps of determining and sending until a configuration solution whereby each of the pluralities of one or more sub-surfaces may be configured so as to establish an indirect radiation path between a respective further plurality of devices and the base station for a respective in which the characteristic signal power assigned to each device remains apparent in the signals received from each respective device at the base station after passing via the indirect radiation path is obtained, and to configure the pluralities of one or more sub-surfaces accordingly.

In accordance with the present invention in a third aspect there is provided a computer program comprising instructions which, when the program is executed by a computer, cause the computer to carry out the method of the second aspect.

In accordance with the present invention in a third aspect there is provided a computer-readable medium comprising instructions which, when executed by a computer, cause the computer to carry out the method of the second aspect.

BRIEF DESCRIPTION OF THE DRAWINGS

The invention will be better understood and its various features and advantages will emerge from the following description of a number of exemplary embodiments provided for illustration purposes only and its appended figures in which:

Figure 1    presents an exemplary RIS structure as known in the prior art; Figure 2 presents an equivalent circuit of a part of the exemplary RIS structure of figure 1 as known in the prior art;

Figure 3    provides a representation of an oriented phase gradient in RIS according to figures 1 and 2;

Figure 4    presents a use case scenario for a RIS device;

Figure 5    presents the context of embodiments of the invention;

Figure 6    presents a method in accordance with an embodiment;

Figure 7    presents a computer suitable for carrying out a method according to an embodiment; and

Figure 8    presents a base station incorporating computer suitable for carrying out a method according to an embodiment.

**Detailed description**

While the respective benefits of NOMA systems on one hand and the recourse to RIS devices on the other are apparent, it will also be appreciated that these two technologies are inherently antagonistic. In particular, it is a characteristic of the NOMA uplink that each user device transmitting to the base station on a given sub-band is distinguished by the base station on the basis of the power of the received signal. This is generally possible where the received signal power from each user is equal to or greater than the sum of the received power signal levels for all users having a lower power level in the same sub-channel. While in conventional operation the signal power for each device can be determined on the basis of channel characteristics which evolve relatively slowly over time, it will be apparent that the modulation of the $\Phi$ characteristic, with its amplitude component, with a view to dynamically improving overall channel conditions is likely to upset this fine characterisation and undermine the possibility of distinguishing user signals on the basis of the received signal power.

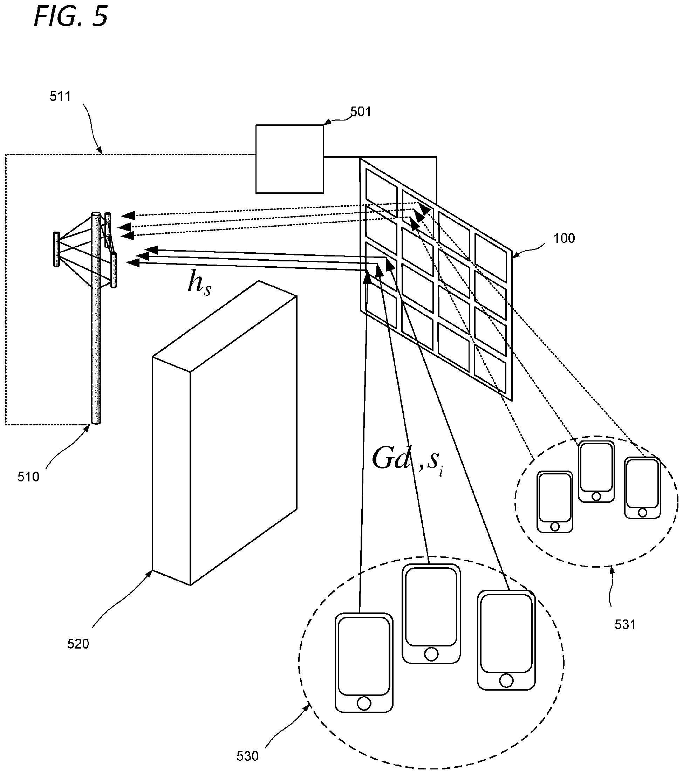

Figure 5 presents the context of embodiments of the invention.

As shown in figure 5 a base station 510 is in wireless communication with a plurality of user devices 530.

A user device may comprise a mobile telephone, an Internet of Things device, or any device capable of establishing a NOMA uplink.

Each device transmits non-orthogonally multiplexed signals on the same sub-band and the base station discriminates the devices on the basis of a characteristic signal power for example on the basis of a NOMA system.

It may be noted that this discrimination is performed on the basis of a characteristic received power level, which does not preclude the initial transmit powers being equal, and modulated by path characteristics, and in particular the configuration of intervening RIS devices as discussed herein.

As shown, the direct path between the base station and the user devices is obstructed by obstacle 520, degrading the performance of the direct communication channel. Meanwhile, the system further comprises at least one reconfigurable intelligent surface (RIS) 100 and a controller 501 , the reconfigurable intelligent surface comprising one or more sub-surfaces whose orientation is dynamically configurable under the control of the controller, the or each reconfigurable intelligent surface being situated with respect to the base station such that when suitably oriented in accordance with the principles presented with respect to figures 1 to 3, the one or more sub-surfaces establish an indirect radiation path between the devices and the base station.

The RIS 100 may be of any type, any may preferably be of a type which permits independent control of phase and amplitude components as discussed above, including discrete/continuous surface types, architectures offering binary/continuous control of elements, active elements, and so forth. Active RIS elements can be used since they have the capacity of the passive elements + the amplification of the signals if needed.

The devices may be denoted $d_k$, such that $G_{d_k}^T$ is the channel gain for the radiation path between each device and the one or more sub-surfaces and h is the channel gain vector for the radiation path between the one or more sub-surfaces and the base station, and $h_{d_k}$ is the channel gain vector for the direct radiation path between each device and the base station.

As noted in the discussion of figure 3, each sub-surface of a RIS may be controlled so as to modulate the phase and/or amplitude of the device (subject to the selection of a suitable circuit affording independent and variable control of these factors, as known in the art).

Meanwhile, in accordance with the embodiment, the controller 501 is adapted to configure the one or more sub-surfaces so as to establish an indirect radiation path between the devices 530 and the base station 510 in which the a characteristic received signal power assigned for each device such that the received signal power for each device is equal to or greater than the sum of the received power levels for all devices having a lower power level, is respected in the signals received from each respective device at the base station after passing via the indirect radiation path.

It will be appreciated that this implies that certain determinations have already been made. In particular, in a typical NOMA system, it will have been determined:

1. How many power levels are available on each sub-band

This can be determined in view of the basic requirement that the received signal power for each device is equal to or greater than the sum of the received power levels for all devices having a lower power level, together with knowledge of the channel gain, and the required signal to interference plus noise ratio (SINR) for correct decoding of the signal of each user device, bearing in mind that channel gain largely depends on path loss, i.e. on distances between the devices and the RIS as well as the RIS and the Base station, the requested rate for the devices and the environment path loss attenuation.

2. which user devices will transmit on a given sub-band

In some cases, a Coordinated method may be preferred in which the Base Station commands each device to transmit using which sub-band

Alternatively the devices may try to find their sub-band using reinforcement learning techniques.

3. Which of the available power levels should be attributed to which user device, for a sub-band under consideration.

The skilled person will appreciate that different approaches to these considerations are possible, of which certain examples are discussed below.

As discussed above, the configuration of the one or more sub-surfaces is defined in terms of a phase parameter value Φ such that, when applied to a respective sub-surface adjusts the phase of the incoming signal in order to achieve a particular orientation for the reflected signal, whilst also maintaining the required power relationship of all signals reflected by that sub surface.

The configuration of the one or more sub-surfaces may be determined by solving the equation system arising from the formula:

$$V_{d_k} = P_{d_k}^t \left| G_{d_k}^T \Phi \mathrm{h} + h_{d_k} \right|^2$$

for Φ, Where Φ is a configuration parameter of the one or more sub-surfaces having a phase and amplitude component, $V_{d_k}$ is the characteristic received signal power assigned to each respective device $d_k$ such that the received signal power for each device is equal to or greater than the sum of the received power levels for all devices having a lower power level, $G_{d_k}^T$ is the channel gain for the radiation path between each device and the one or more sub-surfaces and h is the channel gain vector for the radiation path between the one or more sub-surfaces and the base station, and $h_{d_k}$ is the channel gain vector for the direct radiation path between each device and the base station.

The number of reconfigurable intelligent surfaces to be assigned to a particular group of user devices is another variable, which may be determined as a preliminary consideration with points 1-3 above, or may be used as an adjustment factor. The determination may be made on the basis of the energy efficiency of the system, i.e.

$$\text{Energy Efficiency} = \frac{\text{Sum Rate}}{\text{Total Power}}$$

By progressively adding reconfigurable intelligent surfaces, starting with the best reconfigurable intelligent surfaces based on the channel gains, and observing the evolving tradeoff between data rate and total power, an optimum compromise can be identified. By maximizing the total sum rate, the numerator of the ratio is maximized leading to energy efficiency maximization.

When dealing with multiple sub-surfaces, $G_{d_k}^T$ represents the transpose of vector of $g_{d_k,s}$ elements with $g_{d_k,s}$ being the channel gain between the device $d_k$ and the sub-surface $s$. $\Phi$ is a diagonal matrix of $\beta_s e^{j\phi_s}$ elements with $\beta_s$ being the reflecting coefficient and $\phi_s$ is the phase angle of the sub-surface $s$. $H$ is a vector of $h_s$ elements with $h_s$ being the channel gain between the sub-surface $s$ and the BS. Then a matrix product is done in order to compute the total channel gain

It will be appreciated that there may exist multiple solutions compatible with the desired objectives. Where this is the case, the candidate configuration solution offering the largest total sum rate may be selected.

An additional precision concerns the found solution itself. For example if we have 3 devices and 4 sub-surfaces, the found solution would be the one that makes all 3 devices go through all sub-surfaces while considering the 3 $h_{d_k}$ which correspond to the direct device-base station links.

Where competing solutions are characterized in terms of the different possible combinations of the phase and an amplitude components of $\Phi$, it may generally be preferable to select whichever solution has the highest amplitude value, since it will not generally be desirable to deliberately attenuate the signal in view of the general objective of making the most efficient possible use of each user device's power resources.

The base station 510 may be adapted to determine the channel gain for the indirect radiation path for each device. The system may optionally comprise a communications link 511 between the base station 510 and the controller 501. On this basis, the base station may furthermore be adapted to determine the configuration parameter $\Phi$ and to transmit the selected value to the controller 501 via the communications link so as to cause the controller to configure the RIS 100 accordingly, to the controller via the communications link. The communications link may comprise any suitable communications type, including a cellular channel of the same type as established between the user devices and the base station.

There may additionally be provided one or more further reconfigurable intelligent surfaces Eacj comprising one or more sub-surfaces in respective further reconfigurable intelligent surfaces. In such a case, the controller 501 may be further adapted to determine a configuration solution whereby each of the pluralities of one or more sub-surfaces may be configured so as to establish an indirect radiation path between a respective further plurality of devices 531 and the base station 501 in which the characteristic received signal power assigned for each device is respected in the signals received from each respective device at the base station after passing via the indirect radiation path, and to configure the pluralities of one or more sub-surfaces accordingly.

Furthermore, in cases where the system comprises one or more further reconfigurable intelligent surfaces , each comprising one or more further pluralities of one or more sub-surfaces, the controller may be adapted to determine that no configuration solution whereby each of the pluralities of one or more sub-surfaces may be configured so as to establish an indirect radiation path between a respective further plurality of devices and the base station in which the characteristic received signal power assigned for each device is respected in the signals received from each respective device at the base station after passing via the indirect radiation path is available. In such cases, the Base Station may intervene to exchange the characteristic power level attributions of one or more pairs of devices, and to repeat the steps of determining and exchanging until a configuration solution is obtained, and to configure the pluralities of one or more sub-surfaces accordingly.

The exchange of device power levels may be performed randomly, or according to a predetermined sequence, or in reverse order of anticipated performance in terms of Quality of Service, or otherwise.

The possibility of swaps of devices between power levels is valid in the case where at least 1 device is capable of being configured (by the value of $\Phi$) to use one of a plurality of possible power levels.

The system may further be adapted prior to the step of configuring one or more sub-surfaces so as to establish an indirect radiation path between the devices and the base station in which the characteristic signal power assigned to each device remains apparent in the signals received from each respective device at the base station after passing via the indirect radiation path, to perform a step of determining at the base station, at the controller or elsewhere, which of a second plurality of devices to attribute to the sub-bands as the first plurality of devices, and to emit an instruction to each device in the first plurality of devices to transmit on that sub-band accordingly.

The system may be further adapted prior to the step of configuring one or more sub-surfaces so as to establish an indirect radiation path between the devices and the base station in which the characteristic signal power assigned to each device remains apparent in the signals received from each respective device at the base station after passing via the indirect radiation path, to perform a step of determining at each device whether to attempt a transmission on the sub-band in question.

The system may comprise one or more further reconfigurable intelligent surface each comprising one or more respective further pluralities of one or more sub-surfaces. Where this is the case, it may be determined at the controller or base station or elsewhere that no configuration solution whereby each of the pluralities of one or more sub-surfaces may be configured so as to establish an indirect radiation path between a respective further plurality of devices and the base station in which the characteristic received signal power assigned for each device is respected in the signals received from each respective device at the base station after passing via the indirect radiation path is available. Where such a determination is made, the sub-band having the highest number of available solutions may be selected as a reference sub band, and sending the devices that use the reference channel their achieved rates as rewards, and sending a rate to the other devices, such that the other devices are incentivized to change to different sub-bands, and to repeat the steps of determining and sending until a configuration solution whereby each of the pluralities of one or more sub-surfaces may be configured so as to establish an indirect radiation path between a respective further plurality of devices and the base station in which the characteristic signal power assigned to each device remains apparent in the signals received from each respective device at the base station after passing via the indirect radiation path is obtained, and to configure the pluralities of one or more sub-surfaces accordingly.

For example, is such a system where spectrum access is uncoordinated, devices strive to organize their transmissions autonomously, without relying on any external intervention. In order to solve the problem of channel allocation, a multi-player Multi-armed Bandit framework with zero-reward in case of collision may be adopted as a suitable decentralized optimization mechanism. The set of players consists of the set of user devices K, and the set of actions available to each player *dk* is the set of available sub-bands A.

When playing an action, assuming no collision, the device receives a reward equivalent to its achieved rate given by Shannon's formula:

$$R_{d_{k,c}} = W log_2(1 + \Gamma_{d_{k,c}})$$

here $\Gamma_{d_{k,c}}$ is the achieved SINR of device $d_k$ on the c-th channel, given by

$$\Gamma_{d_{k,c}} = \frac{v_l}{\sum_{j=l+1}^{L} v_j + \sigma^2}$$

Where $v_l = P_{d_k}^t \times \left| \sum_{i=1}^{I} \delta_i \times g_{d_{k,i,c}}^T \Phi_i \text{h}_{\cdot i,c} + h_{d_{k,c}} \right|^2$ is the received power level configured by the RIS for detecting the signal of device *dk*. In the denominator, each *vj* corresponds to a received power level configured for a user whose signal has not been retrieved yet (i.e. whose decoding order comes after that of *dk's* signal). Hence $\sum_{j=l+1}^{L} v_j$, is the residual NOMA interference not canceled by SIC (successive interference cancellation.

If the number of devices that have selected the same channel c at a timeslot t is larger than the total number of power levels, i.e., if *Kc > L,* a collision occurs leading to a failure in decoding the involved signals of the devices. Let $\eta dk$ be the collision indicator for device *dk* on channel c:

$$\eta_{d_{k,c}} = \begin{cases} 0, in \ case \ of \ a \ collision \\ 1, otherwise. \end{cases}$$

The reward that a device obtains when selecting a channel c is therefore given by the utility function: $U_{d_{k,c}} = \eta_{d_{k,c}} \times R_{d_{k,c}}$

Since the system is uncoordinated, no communication is held between the devices. In fact, each device has only access to its own list of played actions and its corresponding rewards. Since the rewards are unknown beforehand, an exploration phase is needed to learn them.

Alternatively, the system may determine how many power levels to attribute to the sub-band based on the channel gain for the radiation path between each device and the one or more sub-surfaces and h is the channel gain vector for the radiation path between the one or more sub-surfaces and the base station, and attributing the power levels to respective devices based on the channel gain for the radiation path between each device and the one or more sub-surfaces and h is the channel gain vector for the radiation path between the one or more sub-surfaces and the base station.

These various considerations may be combined in one embodiment in an algorithm as set out below.

Algorithm 1: Proposed RIS-NOMA

Channel allocation and Configuration of the RIS elements

Initialization: Each device $dk$ builds its action profile set $A_{d_k}$ containing all the available sub-bands. All devices transmit data using a constant power $P_{d_k}^t$.

for t=2:T do:

1- On each channel $c$, the received power levels are allocated by the BS, for RIS $i$, based on the decreasing order of the aggregated channel gains, i.e. $g_{d_{k,i,c}} \circ h_{i,c}$

When $Kc > L$, all the collisions are assigned to the $L$-th power level.

2- Solve the system of equations formulated in on each channel independently.

3- Check for common solutions of the reflection angles for the different sub-bands.

In case of a common solution:

Configure the RIS with the common solution found.

Devices transmitting on the sub-bands receive their achieved rates as rewards.

4- In case of no common solution found:

Choose the channel with the highest number of solutions as reference.

Devices transmitting on this reference receive their achieved rates as rewards, while others receive a zero reward.

// Sub-band Allocation at the devices level:

for i=1:K do

// Utility function received from the BS:

$$U_{d_k,a_{i*}} = \eta_{d_{k,c}} \times R_{d_{k,c}}$$

// Best arm identification:

$$a_i^* = argmax\ Q\ (d_k, a_k) + \sqrt{\frac{2\log(t)}{n_{d_k}(a_k,t)}}$$

// Parameters update:

$$s_i(a_i^*, t+1) = s_i(a_i^*, t) + U_{i,a_i^*}$$

$$n_i(a_i^*, t+1) = n_i(a_i^*, t) + 1$$

$$Q(d_k, a_i^*) = \frac{s_i(a_i^*, t+1)}{n_i(a_i^*, t+1)}$$

      end

    end

The variables are parameters of the UCB algorithm:

$a_i^*$ : selected arm

$s_i$: total reward for arm $a_i^*$
$n_i$: number of times played
$Q$: Average reward

Such that

$U_{d_k,a_i^*}$ is the reward of the selected arm

As discussed above, this algorithm be accompanied by an algorithm for the selection of RIS for assignment to a particular communications channel.

Algorithm 2: Proposed RIS-NOMA-EE

Branch and Bound Algorithm for EE maximization Initialization: Start with only the RIS having the highest average aggregated channel gain turned on.

1- Partition the feasible region:
Divide the feasible region into smaller nodes that are sequentially explored. Each node is defined by turning on an additional RIS. The number of child nodes from each node is equal to the number of turned off RISs and not investigated yet.

2- Bound computation:
Compute a lower and upper bound for each node in the tree. The lower bound is the solution found so far for its parent nodes. The upper bound is the best possible solution for that node.

3- Branching:
Choose the node with the largest difference between its upper and lower bounds. Split it into a number of child nodes equal to the remaining number of RISs.

4- Repeat steps 2 to 3 for each child node until no gain in Energy Efficiency is achieved by activating additional RISs.

5- Return the best solution found among all the explored nodes.

Figure 5 presents a system in accordance with embodiments. Embodiments may also take the form of a method.

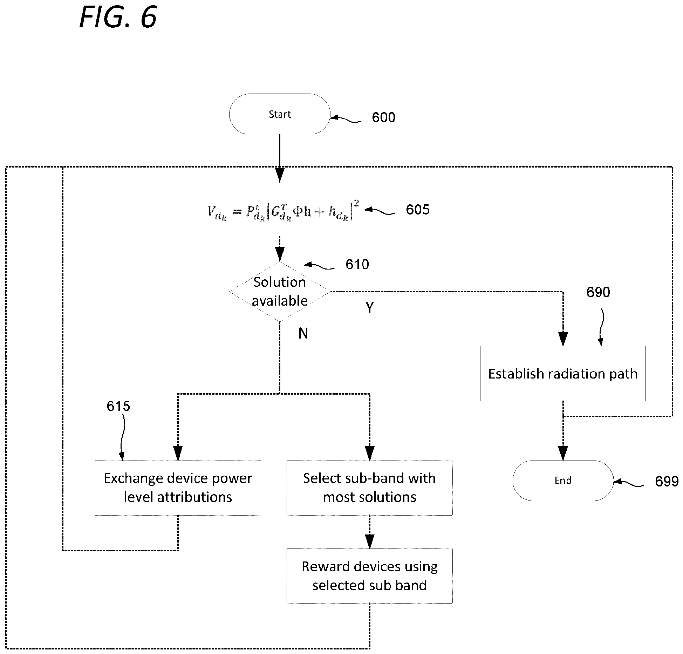

Figure 6 presents a method in accordance with an embodiment.

In line with the foregoing discussion, the method relates to a method of operating a telecommunications system comprising a first plurality of devices and a base station, where each device transmits non-orthogonally multiplexed signals on the same sub-band and the base station discriminates the devices on the basis of a characteristic signal power, the system further comprising a reconfigurable intelligent surface and a controller, the reconfigurable intelligent surface comprising one or more sub-surfaces whose orientation is dynamically configurable under the control of the controller.

As shown the method starts at step 600 before proceeding to step 690 of configuring the one or more sub-surfaces so as to establish an indirect radiation path between the devices and the base station in which the a characteristic received signal power assigned for each device such that the received signal power for each device is equal to or greater than the sum of the received power levels for all devices having a lower power level, is respected in the signals received from each respective device at the base station after passing via the indirect radiation path. As shown, the method may then terminate at step 699, or loop back to step 605 to repeat the operation at some later point in view of evolving channel conditions or user device requirements.

Optionally, the step of determining the configuration of the one or more sub-surfaces may comprise solving the equation system arising from the formula:

$$V_{d_k} = P_{d_k}^t \left| G_{d_k}^T \Phi h + h_{d_k} \right|^2$$

for $\Phi$ as shown as optional step 605, where $\Phi$ is a configuration parameter of the one or more sub-surfaces having a phase and amplitude component, $V_{d_k}$ is the characteristic received signal power assigned to each respective device $d_k$ such that the received signal power for each device is equal to or greater than the sum of the received power levels for all devices having a lower power level, $G_{d_k}^T$ is the channel gain for the radiation path between each device and the one or more sub-surfaces and h is the channel gain vector for the radiation path between the one or more sub-surfaces and the base station, and $h_{d_k}$ is the channel gain vector for the direct radiation path between each device and the base station.

Optionally, where the system comprises one or more further intelligent surfaces each comprising one or more further pluralities of one or more sub-surfaces, the method may comprise the further step 610 of determining that no configuration solution whereby each of the pluralities of one or more sub-surfaces may be configured so as to establish an indirect radiation path between a respective further plurality of devices and the base station in which the characteristic received signal power assigned for each device is respected in the signals received from each respective device at the base station after passing via the indirect radiation path is available. The method may then proceed to step 615 of exchanging the characteristic power level attributions of one or more pairs of the devices. As shown, the method may then loop back to step 605 such that the steps of determining and exchanging are repeated until a configuration solution whereby each of the pluralities of one or more sub-surfaces may be configured so as to establish an indirect radiation path between a respective further plurality of devices and the base station for a respective in which the characteristic signal power assigned to each device remains apparent in the signals received from each respective device at the base station after passing via the indirect radiation path is obtained, and configuring the pluralities of one or more sub-surfaces accordingly.

Alternatively, the method may proceed from step 610 to step 620 of selecting the sub-band having the highest number of available solutions as a reference sub band, sending the devices that use the reference channel their achieved rates as rewards, and sending a rate to the other devices, such that the other devices are incentivized to change to different sub-bands, and repeating the steps of determining and sending until a configuration solution whereby each of the pluralities of one or more sub-surfaces may be configured so as to establish an indirect radiation path between a respective further plurality of devices and the base station for a respective in which the characteristic signal power assigned to each device remains apparent in the signals received from each respective device at the base station after passing via the indirect radiation path is obtained, and to configure the pluralities of one or more sub-surfaces accordingly.

As discussed above, this may constitute a multi-player Multi-armed Bandit framework with zero-reward as discussed above.

It will be appreciated that any of the operations discussed above for example with reference to figure 5 may be incorporated into the method of figure 6.

Accordingly NOMA uplink communications via Reconfigurable Intelligent surfaces are proposed based on the determination of Reconfigurable Intelligent surfaces sub-surface configurations compatible with NOMA successive interference cancellation requirements. For multiple sets of RIS sub-surfaces, the solution extends to reconfiguring user device to sub-channel attributions either in a coordinated mode or an uncoordinated mode based on a multi-player Multi-armed Bandit framework with zero-reward.

The inventive method can be performed by a suitably-programmed general-purpose computer or computer system, possibly including a computer network, storing a suitable program in non-volatile form on a computer-readable medium such as a hard disk, a solid state disk or a CD-ROM and executing the program using its microprocessor(s) and memory.

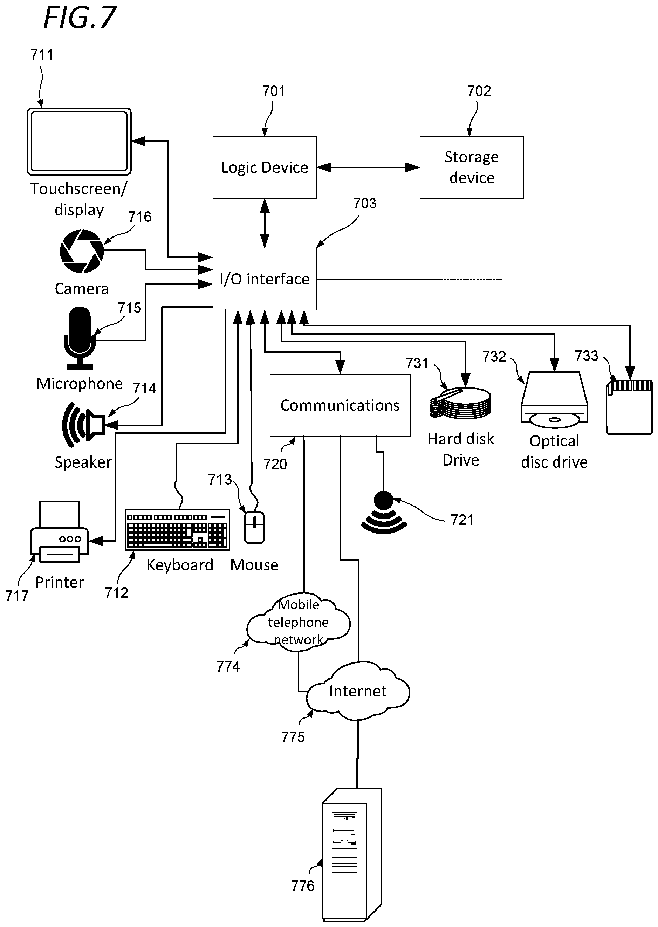

Figure 7 presents a computer suitable for carrying out a method according to an embodiment.

In figure 7, the computer includes a Central Processing Unit (CPU) 701 which may perform the method steps described above while running an executable program, i.e. a set of computer-readable instructions, stored in a memory device such as RAM 702a or ROM 702b or hard disk drive 731, DVD/CD drive 732, or stored remotely. Moreover, one or more computer files defining the spatial relations graphs, and computer files comprising the virtual space and objects defined therein, may also be stored on one or more of memory devices 702a, 702b, 731, 732, or remotely.

The claimed invention is not limited by the form of the computer-readable media on which the computer-readable instructions of the inventive process are stored. For example, the instructions and files can be stored on CDs, DVDs, in FLASH memory, RAM, ROM, PROM, EPROM, EEPROM, hard disk or any other information processing device with which the computer communicates, such as a server or computer. The program can be stored on a same memory device or on different memory devices.

Further, a computer program suitable for carrying out the inventive method can be provided as a utility application, background daemon, or component of an operating system, or combination thereof, executing in conjunction with CPU 1101 and an operating system such as Microsoft XP, Microsoft Windows 10, UNIX, Solaris, LINUX, Apple MAC-OS and other systems known to those skilled in the art.

CPU 701 can be a Xenon processor from Intel of America or a Ryzen processor from AMD of America, or can be other processor types, such as a Freescale ColdFire, IMX, or ARM processor from NXP Semiconductors. Alternatively, the CPU can be a processor such as a Core from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer may include a network interface 720, such as an Intel Ethernet PRO network interface card from Intel Corporation of America, for interfacing with a network, such as a local area network (LAN) 774, wide area network (WAN), the Internet 775 and the like. The method may be implemented remotely, by means of a web application, e.g. operating on remote server 776.

The computer may further include a display controller 710, such as a NVIDIA GeForce RTX graphics adaptor from NVIDIA Corporation of America for interfacing with display 711. A general purpose I/O interface 703 interfaces with a keyboard 712 and pointing device 713, such as a roller ball, mouse, touchpad and the like. The display, the keyboard, the sensitive surface for the touch mode and the pointing device, together with the display controller and the I/O interfaces, form a graphical user interface, used by the user to provide input commands. Commands may additionally be issued via a network connection as described below.

Disk controller 730 connects HDD 731 and DVD/CD 732 with communication bus 720, which can be an ISA, EISA, VESA, PCI, or similar, for interconnecting all of the components of the computer.

A description of the general features and functionality of the display, keyboard, pointing device, as well as the display controller, disk controller, network interface and I/O interface is omitted herein for brevity as these features are known.

The system of figure 7 may implement the operations ascribed to the controller 501, the base station 510, or any user device 530, 531. As such, multiple such systems may be provided operating in coordination to execute respective parts of the methods and operations described.

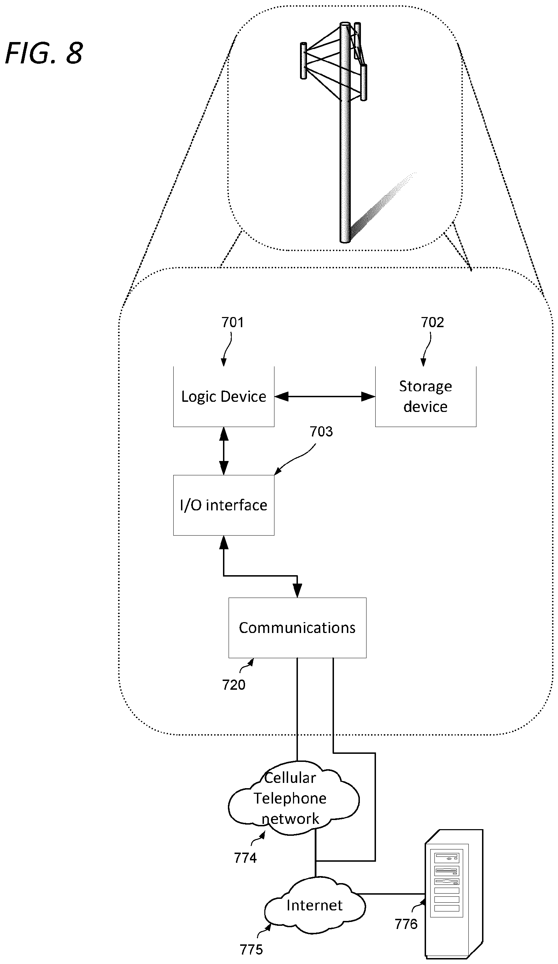

By way of example, Figure 8 presents a base station 510 incorporating computer suitable for carrying out a method according to an embodiment.

As shown in figure 8, a computer 700 comprises a subset of the components described with respect to figure 7 as appropriate to such an implementation context. Specifically, the computer includes a Central Processing Unit (CPU) 701 which may perform the method steps described above while running an executable program, i.e. a set of computer-readable instructions, stored in a memory device 702, in communication with I/O interface 703.

The computer may include a network interface 720, for interfacing with a network, such as a local area network (LAN) 774, wide area network (WAN), the Internet 775 and the like. Operations of the method may be implemented remotely, by means of a web application, e.g. operating on remote server 776.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The examples described above are given as non-limitative illustrations of embodiments of the invention. They do not in any way limit the scope of the invention which is defined by the following claims.

**Claims**

1. A telecommunications system comprising a first plurality of devices and a base station, where each said device transmits non-orthogonally multiplexed signals on the same sub-band and said base station discriminates said devices on the basis of a characteristic signal power, said system further comprising a reconfigurable intelligent surface and a controller, said reconfigurable intelligent surface comprising one or more sub-surfaces whose orientation is dynamically configurable under the control of said controller, said reconfigurable intelligent surface being situated with respect to said base station such that when suitably oriented said one or more sub-surfaces establish an indirect radiation path between said devices and said base station,

   wherein said controller is adapted to determine a configuration solution for said one or more sub-surfaces defining an indirect radiation path between said devices and said base station in which a characteristic received signal power assigned for each device such that the received signal power for each device is equal to or greater than the sum of the received power levels for all devices having a lower power level, is respected in the signals received from each respective device at said base station after passing via said indirect radiation path, by solving the equation system arising from the formula:

$$V_{d_k} = P_{d_k}^t \left| G_{d_k}^T \Phi \mathrm{h} + h_{d_k} \right|^2$$

   for $\Phi$, Where $\Phi$ is a configuration parameter of the one or more sub-surfaces having a phase and amplitude component, $V_{d_k}$ is the characteristic received signal power assigned to each respective device $d_k$ such that the received signal power for each device is equal to or greater than the sum of the received power levels for all devices having a lower power level, $G_{d_k}^T$ is the channel gain for the radiation path between each device and the one or more sub-surfaces and h is the channel gain vector for the radiation path between said one or more sub-surfaces and said base station, and $h_{d_k}$ is the channel gain vector for the direct radiation path between each said device and said base station.

2. The system of any claim 1 wherein said base station is adapted to determine the channel gain for said indirect radiation path for each said device, and wherein said system comprises a communications link between said base station and said controller, wherein said base station is adapted to transmit said configuration parameter for said indirect radiation path to said controller via said communications link.

3. The system of any preceding claim wherein said system comprises one or more further reconfigurable intelligent surfaces each comprising one or more further pluralities of one or more sub-surfaces, and wherein said controller is adapted to determine a configuration solution whereby each of said pluralities of one or more sub-surfaces may be configured so as to establish an indirect radiation path between a respective further plurality of devices and said base station in which the characteristic received signal power assigned for each device is respected in the signals received from each respective device at said base station after passing via said indirect radiation path, and to configure said pluralities of one or more sub-surfaces accordingly.

4. The system of claim 3 wherein a plurality of candidate configuration solutions is determined, and wherein said step of determining a configuration solution comprises selecting a said candidate configuration solution offering the largest total sum rate.

5. The system of any of claims 1 to 4 wherein said system comprises one or more further reconfigurable intelligent surfaces each comprising one or more further pluralities of one or more sub-surfaces, and wherein said controller is adapted to determine that no configuration solution whereby each of said pluralities of one or more sub-surfaces may be configured so as to establish an indirect radiation path between a respective further plurality of devices and said base station in which the characteristic received signal power assigned for each device is respected in the signals received from each respective device at said base station after passing via said indirect radiation path, is available, and
to exchange the characteristic power level attributions of one or more pairs of said devices, and to repeat said steps of determining and exchanging until a configuration solution whereby each of said pluralities of one or more sub-surfaces may be configured so as to establish an indirect radiation path between a respective further plurality of devices and said base station in which the characteristic signal power assigned to each device remains apparent in the signals received from each respective device at said base station after passing via said indirect radiation path is obtained, and to configure said pluralities of one or more sub-surfaces accordingly.

6. A telecommunications system according to any preceding claim wherein said system is further adapted prior to said step of configuring one or more sub-surfaces so as to establish an indirect radiation path between said devices and said base station in which the characteristic signal power assigned to each device remains apparent in the signals received from each respective device at said base station after passing via said indirect radiation path, to perform a step of determining at said base station which of a second plurality of devices to attribute to said sub-bands as said first plurality of devices, and emitting an instruction to each said device in said first plurality of devices to transmit on said sub-band accordingly.

7. A telecommunications system according to any preceding claim wherein said system is further adapted prior to said step of configuring one or more sub-surfaces so as to establish an indirect radiation path between said devices and said base station in which the characteristic signal power assigned to each device remains apparent in the signals received from each respective device at said base station after passing via said indirect radiation path, to perform a step of determining at each device whether to attempt a transmission on said sub-band.

8. The system of claim 7 wherein said system comprises one or more futher reconfigurable intelligent surfaces each comprising one or more further pluralities of one or more sub-surfaces, and wherein said controller is adapted to determine that no configuration solution whereby each of said pluralities of one or more sub-surfaces may be configured so as to establish an indirect radiation path between a respective further plurality of devices and said base station in which the characteristic received signal power assigned for each device is respected in the signals received from each respective device at said base station after passing via said indirect radiation path is available, and to select the said sub-band having the highest number of available solutions as a reference sub band, sending the said devices that use said reference channel their achieved rates as rewards, and sending a rate to the other said devices, such that the other said devices are incentivized to change to different sub-bands, and to repeat said steps of determining and sending until a configuration solution whereby each of said pluralities of one or more sub-surfaces may be configured so as to establish an indirect radiation path between a respective further plurality of devices and said base station in which the characteristic signal power assigned to each device remains apparent in the signals received from each respective device at said base station after passing via said indirect radiation path is obtained, and to configure said pluralities of one or more sub-surfaces accordingly.

9. A telecommunications system according to claim 5, 6 or 7 wherein said system is further adapted prior to said step of configuring one or more sub-surfaces so as to establish an indirect radiation path between said devices and said base station in which the characteristic signal power assigned to each device remains apparent in the signals received from each respective device at said base station after passing via said indirect radiation path, to perform a step of

determining how many power levels to attribute to said sub-band based on said channel gain for the radiation path between each device and the one or more sub-surfaces and h is the channel gain vector for the radiation path between said one or more sub-surfaces and said base station, and
attributing the power levels to respective said devices based on said channel gain for the radiation path between each device and the one or more sub-surfaces and h is the channel gain vector for the radiation path between said one or more sub-surfaces and said base station,.

10. A method of operating a telecommunications system comprising a first plurality of devices and a base station, where each said device transmits non-orthogonally multiplexed signals on the same sub-band and said base station discriminates said devices on the basis of a characteristic signal power, said system further comprising a reconfigurable intelligent surface and a controller, said reconfigurable intelligent surface comprising one or more sub-surfaces whose orientation is dynamically configurable under the control of said controller,

said method comprising the steps of configuring said one or more sub-surfaces so as to establish an indirect radiation path between said devices and said base station in which the a characteristic received signal power assigned for each device such that the received signal power for each device is equal to or greater than the sum of the received power levels for all devices having a lower power level, is respected in the signals received from each respective device at said base station after passing via said indirect radiation path, wherein said step of determining said configuration of said one or more sub-surfaces comprises by solving the equation system arising from the formula:

$$V_{d_k} = P_{d_k}^t \left| G_{d_k}^T \Phi \mathrm{h} + h_{d_k} \right|^2$$

for $\Phi$, Where $\Phi$ is a configuration parameter of the one or more sub-surfaces having a phase and amplitude component, $V_{d_k}$ is the characteristic received signal power assigned to each respective device $d_k$ such that the received signal power for each device is equal to or greater than the sum of the received power levels for all devices having a lower power level, $G_{d_k}^T$ is the channel gain for the radiation path between each device and the one or more sub-surfaces and h is the channel gain vector for the radiation path between said one or more sub-surfaces and said base station, and $h_{d_k}$ is the channel gain vector for the direct radiation path between each said device and said base station.

11. The method of claim 10 wherein said system comprises one or more futher intelligent surfaces each comprising one or more further pluralities of one or more sub-surfaces, and wherein said method comprises the further steps of determining that no configuration solution whereby each of said pluralities of one or more sub-surfaces may be configured so as to establish an indirect radiation path between a respective further plurality of devices and said base station for a respective in which the characteristic received signal power assigned for each device is respected in the signals received from each respective device at said base station after passing via said indirect radiation path is available, and

exchanging the characteristic power level attributions of one or more pairs of said devices, and repeating said steps of determining and exchanging until a configuration solution whereby each of said pluralities of one or more sub-surfaces may be configured so as to establish an indirect radiation path between a respective further plurality of devices and said base station for a respective in which the characteristic signal power assigned to each device remains apparent in the signals received from each respective device at said base station after passing via said indirect radiation path is obtained, and configuring said pluralities of one or more sub-surfaces accordingly.

12. The method of claim 10 wherein said system comprises one or more futher intelligent surfaces each comprising one or more further pluralities of one or more sub-surfaces, and wherein said method comprises the further steps of determining that no configuration solution whereby each of said pluralities of one or more sub-surfaces may be configured so as to establish an indirect radiation path between a respective further plurality of devices and said base station for a respective in which the characteristic received signal power assigned for each device is respected in the signals received from each respective device at said base station after passing via said indirect radiation path is available, and

selecting the said sub-band having the highest number of available solutions as a reference sub band, sending the said devices that use said reference channel their achieved rates as rewards, and sending a rate to the other said devices, such that the other said devices are incentivized to change to different sub-bands, and repeating said steps of determining and sending until a configuration solution whereby each of said pluralities of one or more sub-surfaces may be configured so as to establish an indirect radiation path between a respective further plurality of devices and said base station for a respective in which the characteristic signal power assigned to each device remains apparent in the signals received from each respective device at said base station after passing via said indirect radiation path is obtained, and to configure said pluralities of one or more sub-surfaces accordingly.

13. A computer program comprising instructions which, when the program is executed by a computer, cause the computer to carry out the method of any of claims 10 to 12.

14. A computer-readable medium comprising instructions which, when executed by a computer, cause the computer to carry out the method of any of claims 10 to 12.

**FIG. 1**

**FIG. 2**

**FIG.3**

*FIG. 4*

## FIG. 5

FIG. 6

Start — 600

$$V_{d_k} = P_{d_k}^t \left| G_{d_k}^T \Phi \mathrm{h} + h_{d_k} \right|^2 \longleftarrow 605$$

Solution available — 610

Y

N

690

Establish radiation path

615

Exchange device power level attributions

Select sub-band with most solutions

End — 699

Reward devices using selected sub band

# FIG.7

711

Touchscreen/
display

716

Camera

715

Microphone   714

Speaker

717 Printer   712

Keyboard   Mouse

713

720

701

Logic Device

702

Storage
device

703

I/O interface

Communications

721

731

Hard disk
Drive

732

Optical
disc drive

733

Mobile
telephone
network

774

Internet

775

776

FIG. 8

701

Logic Device

702

Storage device

703

I/O interface

Communications

720

Cellular Telephone network

774

Internet

775

776

**Europäisches Patentamt**
**European Patent Office**
**Office européen des brevets**

# EUROPEAN SEARCH REPORT

Application Number

EP 23 30 6795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KATWE MAYUR ET AL: "Rate Splitting Multiple Access for Sum-Rate Maximization in IRS Aided Uplink Communications", IEEE TRANSACTIONS ON WIRELESS COMMUNICATIONS, IEEE SERVICE CENTER, PISCATAWAY, NJ, US, vol. 22, no. 4, 4 October 2022 (2022-10-04), pages 2246-2261, XP011938450, ISSN: 1536-1276, DOI: 10.1109/TWC.2022.3210338 [retrieved on 2022-10-05] * the whole document * | 1-14 | INV. H04B7/04 H01Q15/14 H04B7/06 |
| | | | TECHNICAL FIELDS SEARCHED (IPC) |
| | | | H04B H01Q |

The present search report has been drawn up for all claims

| Place of search | Date of completion of the search | Examiner |
|---|---|---|
| Munich | 19 March 2024 | Ganis, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. GONG** ; **X. LU** ; **D. T. HOANG** ; **D. NIYATO** ; **L. SHU** ; **D. I. KIM** ; **Y.-C. LIANG**. Toward Smart Wireless Communications via Intelligent Reflecting Surfaces: A Contemporary Survey. *IEEE Commun. Surveys & Tutorials*, 2020, vol. 22 (4), 2283-2314
- **J. ZHAO**. *A Survey of Intelligent Reflecting Surfaces (IRSs): Towards 6G Wireless Communication Networks*, 2019, https://arxiv.org/abs/1907.04789
- **G. YANG** ; **X. XU** ; **Y.-C. LIANG**. Intelligent Reflecting Surface Assisted Non-Orthogonal Multiple Access. *2020 IEEE Wireless Commun. And Net. Conf. (WCNC), Seoul, Korea (South)*, May 2020, 1-6
- **Z. DING** ; **H. VINCENT POOR**. A Simple Design of IRS-NOMA Transmission. *IEEE Commun. Lett.*, 2020, vol. 24 (5), 1119-1123
- **Y. LI** ; **M. JIANG** ; **Q. ZHANG** ; **J. QIN**. Joint Beamforming Design in Multi-Cluster MISO NOMA Reconfigurable Intelligent Surface-Aided Downlink Communication Networks. *IEEE Trans. on Commun.*, 2021, vol. 69 (1), 664-674